# EUROPEAN PATENT SPECIFICATION

(11) **EP 4 500 983 B1**
(45) Date of publication and mention of the grant of the patent: **23.07.2025**
(21) Application number: 23714691.5
(22) Date of filing: 24.03.2023
(51) Int. Cl.: H04W 56/00, H04W 60/04

(54) **SYSTEMS AND METHOD FOR ACTIVATING AND DEACTIVATING A TIME SYNCHRONIZATION (TS) SERVICE**
SYSTEME UND VERFAHREN ZUM AKTIVIEREN UND DEAKTIVIEREN EINES ZEITSYNCHRONISATIONSDIENSTES
SYSTÈMES ET PROCÉDÉ D'ACTIVATION ET DE DÉSACTIVATION D'UN SERVICE DE SYNCHRONISATION TEMPORELLE (TS)

(30) Priority: 25.03.2022 US 202263323530 P
(43) Date of publication of application: 05.02.2025
(73) Proprietor: Telefonaktiebolaget LM Ericsson (publ), 164 83 Stockholm (SE)
(72) Inventor: UDALCOVS, Aleksejs, 194 54 Stockholm (SE); DE ANDRADE JARDIM, Marilet, 164 33 Kista (SE); GARCIA AZORERO, Fuencisla, 28014 Madrid (ES); PANCORBO MARCOS, Maria, Belen, 28035 Madrid (ES); SULTANA, Shabnam, Montreal, Québec H3W2N3 (CA)
(74) Representative: Ericsson
(86) International application number: PCT/EP2023/057600
(87) International publication number: WO 2023/180512

(56) References cited:
- "3rd Generation Partnership Project; Technical Specification Group Services and System Aspects; Procedures for the 5G System (5GS); Stage 2 (Release 17)", vol. SA WG2, no. V17.4.0, 23 March 2022 (2022-03-23), pages 1 - 738, XP052144761, Retrieved from the Internet <URL:https://ftp.3gpp.org/Specs/archive/23_series/23.502/23502-h40.zip 23502-h40.docx> [retrieved on 20220323]
- SHABNAM SULTANA ET AL: "AF confirming TSCTSF s intention to deactivate the time sync service", vol. 3GPP SA 2, no. Online; 20230116 - 20230120, 9 January 2023 (2023-01-09), XP052231794, Retrieved from the Internet <URL:https://www.3gpp.org/ftp/tsg_sa/WG2_Arch/TSGS2_154AHE_Electronic_2023-01/Docs/S2-2300317.zip S2-2300317_TRS_URLLC_TS23502_Confirming_TSCTSF_intention-v4.docx> [retrieved on 20230109]
- "3rd Generation Partnership Project; Technical Specification Group Services and System Aspects; Study on enhanced support of Industrial Internet of Things (IIoT) in the 5G System (5GS) (Release 17)", 29 November 2020 (2020-11-29), XP051960469, Retrieved from the Internet <URL:https://ftp.3gpp.org/tsg_sa/WG2_Arch/Latest_SA2_Specs/Latest_draft_S2_Specs/23700-20-130.zip 23700-20-130-rm.docx> [retrieved on 20201129]
- "3rd Generation Partnership Project; Technical Specification Group Services and System Aspects; Study on timing resiliency and TSC and URLLC enhancements (Release 18)", no. V0.1.0, 4 March 2022 (2022-03-04), pages 1 - 15, XP052144355, Retrieved from the Internet <URL:https://ftp.3gpp.org/Specs/archive/23_series/23.700-25/23700-25-010.zip 23700-25-010_MCCclean.docx> [retrieved on 20220304]

## Description

### TECHNICAL FIELD

Disclosed are embodiments related to the activation and deactivation of a time synchronization service in with respect to a coverage area (CA).

### BACKGROUND

### Figure 1

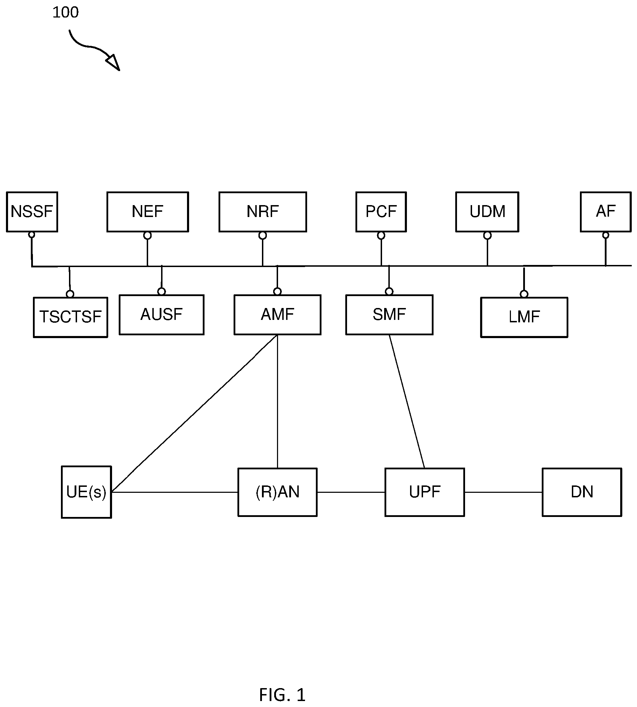

**FIG. 1** illustrates an exemplifying wireless communication system 100 represented as a Fifth Generation (5G) network architecture comprising an Access Network (AN) (e.g., a Radio AN (RAN)) and a Core network (CN) comprising network entities in the form of instances of various Network Functions (NFs). Typically, the AN comprises base stations, e.g., such as evolved Node Bs (eNBs) or 5G base stations (gNBs) or similar. As shown in FIG. 1, user equipments (UEs) connect to the AN as well as an Access and Mobility Management Function (AMF). As further shown in FIG. 1, the 5G CN NFs include: a Network Slice Selection Function (NSSF), a Network Exposure Function (NEF), a Time Sensitive Communication and Time Synchronization Function (TSCTSF), an Authentication Server Function (AUSF), a Unified Data Management (UDM), an Access and Mobility Management Function (AMF), a Session Management Function (SMF), a Policy Control Function (PCF), an Application Function (AF), and a NF Repository Function (NRF).

The NFs in the 5G core network architecture are independent, modularized functions, which allows independent evolution and scaling. Modularized function design enables the 5G core network to support various services in a flexible manner. The service(s) that an NF provides to other authorized NFs can be exposed to the authorized NFs through a service based interface (SBI). The SBIs are indicated by the letter "N" followed by the name of the NF, e.g. Namf for SBIs of the AMF and Nsmf for SBIs of the SMF etc.

A number of 5G core network NFs of different types are typically instantiated per default in a 5G core network, e.g. such as an AMF, a NRF, a PCF and a SMF etc. Other 5G core network NFs may be instantiated as needed and several NFs of the same type can also be instantiated if required, e.g. to distribute load to additional NF(s) of the same typ. Thus, an NF instance may be seen as an example or a specimen of a certain NF. Herein, the terms NF and NF instance are used interchangeably, unless otherwise expressly stated or is apparent from the context in which the terms are used. An NF instance exposes one or more NF Service Instances.

Some properties of the NFs shown in FIG.1 may be described in the following manner. The AMF provides UE-based authentication, authorization and mobility management, etc. A UE, even if using multiple access technologies, is typically logically connected to (i.e., served by) a single AMF, since the AMF is independent of the access technologies. However, the UE can be served by, for example, two AMFs if the UE is connected to two different PLMNs using separate types of access networks (e.g., the UE is connected to a first PLMN via a 3GPP access network and the UE is also connected to a second PLMN via a non-3GPP access network). The SMF is responsible for session management and allocates IP addresses to UEs and selects and controls the UPF for data transfer with respect to the UEs. If a UE has multiple Protocol Data Unit (PDU) sessions, different SMFs may be allocated to each PDU session to manage them individually and possibly provide different functionalities per PDU session. The AF can configure time synchronization (TS) for one or more specified UEs. For example, the AF can invoke procedures to activate, modify or deactivate Precision Time Protocol (PTP) and General PTP (gPTP) instances.

### Time Synchronization

As described in 3GPP Technical Specification (TS) 23.502 V17.4.0 ("TS 23.502"), "the time synchronization exposure is provided by NEF that uses the service provided by [Time Sensitive Communication and Time Synchronization Function (TSCTSF)]. The AF that is part of operator's trust domain may invoke the services directly with TSCTSF and TSCTSF responds/notifies directly to the AF, accordingly."

As further described in TS 23.502, an AF may activate a time synchronization service using the Nnef_TimeSynchronization_ConfigCreate service operation. The service operation creates a time synchronization configuration based on the service parameters as indicated in the create request. The AF may deactivate the time synchronization service using the Nnef_TimeSynchronization_ConfigDelete service operation, which deletes the corresponding time synchronization service configuration. The Nnef_TimeSynchronization_ConfigCreate may contain the parameters shown below in Table 1:

**TABLE 1 (See Table 4.15.9.3-1 of TS 23.502)**

| **Time Synchronization Parameter** | **Description** |
|---|---|
| PTP instance type | Identifies the requested PTP instance type as described in clause 5.27.1.4 of 3GPP TS 23.501 V17.3.0 ("TS 23.501"). |
| Transport protocol | Identifies the requested transport protocol for PTP instance as described in clause 5.27.1.4 of TS 23.501. This is applicable for IEEE Std 1588 [76] Boundary Clock and Transparent Clock operation. |
| PTP Profile | Identifies the PTP profile for the PTP instance as requested by AF. |
| Grandmaster enabled | Indicates whether the AF requests the PTP instance in 5GS to be able to act as a grandmaster for PTP or gPTP (depending on the requested PTP instance type). |
| | This is applicable for IEEE Std 1588 [76] Boundary Clock or IEEE Std 802.1AS [75] operation. |
| | [optional] |
| Grandmaster priority | Indicates a priority used as defaultDS.priority1 when generating Announce message when 5GS acts as (g)PTP GM. Applicable only if the Grandmaster enabled = TRUE. If omitted, the default value as described in the PTP Profile is used. |
| | [optional] |
| Time Domain | (g)PTP domain of the PTP instance as defined in IEEE Std 1588 [76]. |
| Temporal Validity Condition | Indicates start-time and stop-time attributes that describe the time period when the time synchronization service for a PTP instance is active. |
| | [optional] |
| Time synchronization error budget | Indicates the time synchronization budget for the time synchronization service (as described in clause 5.27.1.9 of TS 23.501). |
| | [optional] |

| **For each PTP port in the PTP instance** | |
|---|---|
| Either UE identity (UID) (for a DS-TT port), or "N6 interface" indication | Identifies the UE/DS-TT which the parameters below apply. "N6 interface" indicates that the parameters below apply to the N6 interface. |
| | If the "PTP port" needs to be identified, this field refers to the UE identity (e.g., GPSI or SUPI). |
| | If the N6 termination needs to be identified, then this field indicates "N6 interface" flag, instead of SUPI or GPSI. |
| PTP enabled | TRUE/FALSE. This is used to set the portDS.portEnable. If omitted, the default value as described in the PTP Profile is used. |
| | [optional] |
| Log Sync Interval | Specifies the mean time interval between successive Sync messages. This is applicable for IEEE Std 1588 [76] Boundary Clock or IEEE Std 802.1AS [75] operation. If omitted, the default value as described in the PTP Profile is used. |
| | [optional] |
| Use management settable Log Sync Interval | TRUE/FALSE. This is applicable if the PTP Profile is I IEEE Std 802.1AS [75]. |
| | When set to FALSE, the Log Sync Interval is used to set the initialLogSyncInterval as described in IEEE Std 802.1AS [75]. When set to TRUE, the Log Sync Interval is used to set the mgtSettableLogSyncInterval as described in IEEE Std 802.1AS [75]. |
| | If omitted, the default value as described in the IEEE Std 802.1AS [75] is used. |
| | [optional] |
| Log Announce Interval | Specifies the mean time interval between successive Announce messages. This is applicable for IEEE Std 1588 [76] Boundary Clock or IEEE Std 802.1AS [75] operation. If omitted, the default value as described in the PTP Profile is used. |
| | [optional] |
| Use management settable Log Announce Interval | TRUE/FALSE. This is applicable if the PTP Profile is IEEE Std 802.1AS [75]. |
| | When set to FALSE, the Log Announce Interval is used to set the initialLogAnnounceInterval as described in IEEE 802.1AS. When set to TRUE, the Log Announce Interval is used to set the mgtSettableLogAnnounceInterval as described in IEEE Std 802.1AS [75]. |
| | If omitted, the default value as described in the IEEE Std 802.1AS [75] is used. |
| | [optional] |

### SUMMARY

Certain challenges presently exist. For instance, the inventors have recognized that it would be advantageous for an AF to have the ability to instruct the core network to activate a TS service in response to a particular UE (e.g., any UE included in a specifically identified group of UEs or a specifically identified UE) moving into a coverage area (CA) and to deactivate the service when the UE moves out of the CA, but currently no such mechanism exists.

Accordingly, in one aspect there is provided a method performed by a time synchronization entity (TSE) (e.g., a TSCTSF). The method includes receiving a first request comprising i) an ID associated with at least a first UE (e.g., the ID is associated only with the first UE, the ID is associated with a group of UEs that includes the first UE, or the ID identifies any UE) and ii) CA information specifying a CA. In response to receiving the create service request, the TSE either: i) invokes a subscription service to receive a notification whenever the first UE moves into or moves out of an area of interest, Aol, or ii) sends to a PCF a second request comprising the CA information, wherein the second requests is configured to cause the PCF to invoke the subscription service to receive a notification whenever the first UE moves into or moves out of an Aol, wherein the Aol is identical to the CA or the Aol is a subset of the CA..

As a further, non-claimed example, there is provided a method performed by a data management entity (DME) (e.g., UDM). The method includes receiving a first subscription request transmitted by a TSE (e.g., TSCTSF), the first subscription request comprising: i) an ID associated with at least a first UE and ii) CA information specifying a CA. The method also includes selecting at least a first access and mobility management entity (AME) (e.g., AMF) based on the CA information included in the first subscription request. The method also includes transmitting to the first AME a second subscription request comprising the ID (or a UE ID (e.g., SUPI) associated with the ID), wherein the second subscription request requests the first AME to provide to the DME a notification as a result of the AME detecting that a UE associated with the ID or UID has entered (moved into) or left (moved out of) an area of interest, Aol, wherein the Aol is identical to the CA or the Aol is a subset of the CA.

As a further, non-claimed example, there is provided a computer program comprising instructions which when executed by processing circuitry of a network node causes the network node to perform any one of the methods disclosed herein. In another aspect there is provided a carrier containing the computer program, wherein the carrier is one of an electronic signal, an optical signal, a radio signal, and a computer readable storage medium.

As a further, non-claimed example, there is provided a network node, where the network node is configured to perform any one of the methods disclosed herein. In some embodiments, the network node includes processing circuitry and a memory containing instructions executable by the processing circuitry, whereby the network node is configured to perform any one of the methods disclosed herein.

An advantage of the embodiments disclosed herein is that they enable an AF to configure a TSCTSF to activate a TS service when a UE enters a CA and to deactivate the service when the UE leaves the CA.

### BRIEF DESCRIPTION OF THE DRAWINGS

The accompanying drawings, which are incorporated herein and form part of the specification, illustrate various embodiments.
FIG. 1 illustrates an exemplifying communication system.
FIGS. 2-5 illustrate message flow diagrams.
FIG. 6 is a flowchart illustrating a process according to an embodiment.

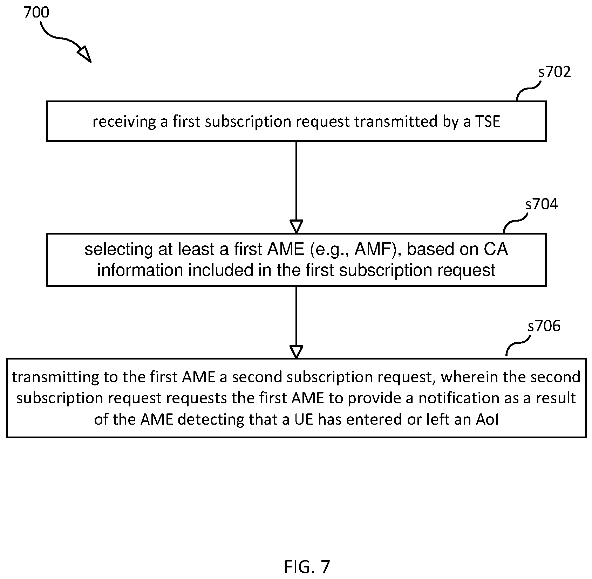

FIG. 7 is a flowchart illustrating a process.
FIG. 8 illustrates a network node.

### DETAILED DESCRIPTION

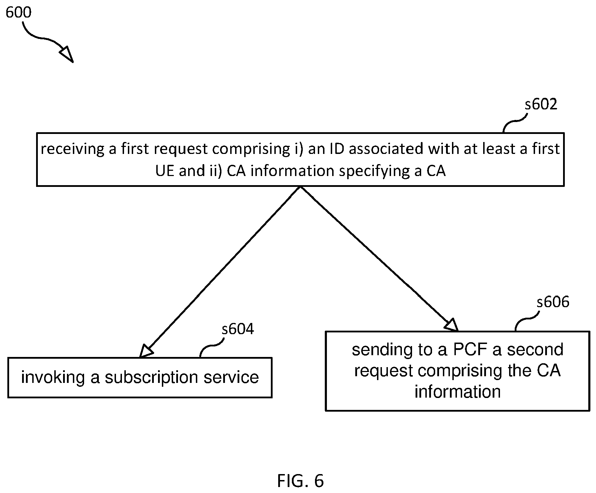

This disclosure provides embodiments for enabling an AF to request a time synchronization (TS) service in a specific coverage area (CA) (i.e., one or more geographic regions). The embodiments exploit "UE mobility event notification" to enable the requested TS service within the CA. In the following, the invention is illustrated by figure 6 and related description paragraphs, which refer to embodiments of the invention. The other figures and related description paragraphs are provided for a better understanding of the invention.

### Enabling time synchronization service in a specific CA

### Introduction

This disclosure proposes to enable an AF to enable a time synchronization (TS) service for a UE (or group of UEs) when the UE(s) enter a CA specified by the AF.

Furthermore, in order to enforce that the requested TS service is enabled for UEs (a specific UE or a group of UEs) only in that coverage area, the proposed embodiments exploit the functionality provided by an AMF of tracking and reporting UE mobility events (see, e.g., clause 5.3.4.4 of TS 23.501). Upon detecting the change of the UE presence in a specified Area of Interest (i.e., IN, OUT, or UNKNOWN), the AMF notifies the subscribed NF consumer (e.g., UDM, TSCTSF, SMF, or PCF) about the event. The TS service is activated only when the targeted UE is determined to have entered the specified CA, deactivated when the UE leaves the specified CA or upon the AF request, and remains unchanged when the UE presence in the specified CA is not known.

### Functional Description

In one embodiment, an AF within an operator's domain may specify a CA using a list of Tracking Area Identities (TAls) that jointly represents the CA for a specific UE (e.g., identified by a Subscription Permanent ID (SUPI) or a group of UEs (identified by an Internal Group ID)) for whom the requested time synchronization services shall be enabled.

In one embodiment, an AF outside the operator's domain specifies a CA (targeted coverage area) using geographical data (e.g. longitude/latitude) and then an NEF transforms this information into a list of one or more TAI(s) as the AF request outside the operator's domain shall go through the NEF before contacting the TSCTSF. The NEF also maps any GPSI to SUPI and any External Group ID to an Internal Group ID.

In one embodiment, the AF request for a TS service in a specific CA may target a specific UE or a group of UEs. If the target is a group of UEs, the TSCTSF may need to invoke the UDM service operation (Nudm_SDM_Get in particular) to retrieve the subscription data and map an Internal Group ID to a SUPI list identifying UEs in that group.

An NF consumer (e.g., UDM, TSCTSF, PCF, SMF) subscribes to the UE mobility event notification service from one more or more AMFs by transmitting to each AMF a subscribe request (e.g., Namf_EventExposure_Subscribe message) containing area of interest (Aol) information (e.g., a list of one more TAls) identifying one or more Aols (e.g., tracking areas (TAs)) to get notified whenever the UE enters/leaves any one of the Aols identified by the Aol information. The Aol information sent to an AMF may be the CA information received by the TSCTSF from the AF/NEF or a subset of that CA information. Accordingly, in one embodiment, the CA information or a subset of the CA information is used as an Event Filter of the subscription.

The AMF tracks the UE's location to determine the UE's presence in the Aol (e.g., the AMF determines whether UE is has entered or left any one of the TAs identified by the TAI list included in the subscribe request) . Further, the AMF notifies a consumer that has subscribed to the UE mobility event notification service about the UE(s) presence (IN, OUT, or UNKNOWN) in the Aol.

The AF-requested TS service may be activated by the TSCTSF or by the PCF when it determines based on the received notification(s) (e.g., Namf_EventExposure_Notify service operation) from the AMF(s) that the targeted UE(s) are present IN the specified CA. If the targeted UE(s) move OUT the requested CA, the TSCTSF/PCF deactivates the AF-requested TS service. The AF can deactivate the ongoing/active TS service prior to reaching a stop-time (if included in the activation request inside a Temporal Validity Condition, an optional Time Synchronization parameter, Table 4.15.9.3-1 in TS 23.502) by sending the deactivation request. After the deactivation request from the AF, the consumer of Namf_EventExposure service unsubscribes from the UE mobility event notification by invoking the Namf_EventExposure_Unsubscribe to the AMF. The existing time synchronization activation/deactivation/modification procedures (clause 4.15.9 of TS 23.502) are used for this purpose. If the UE(s) presence in specified CA becomes UNKNOWN (as reported by the AMF), the TSCTSF keeps the ongoing service until the UE(s) presence is known (IN or OUT) or the service reaches its stop-time. Various alternative embodiments are described below.

### Alternative 1

### Figure 2

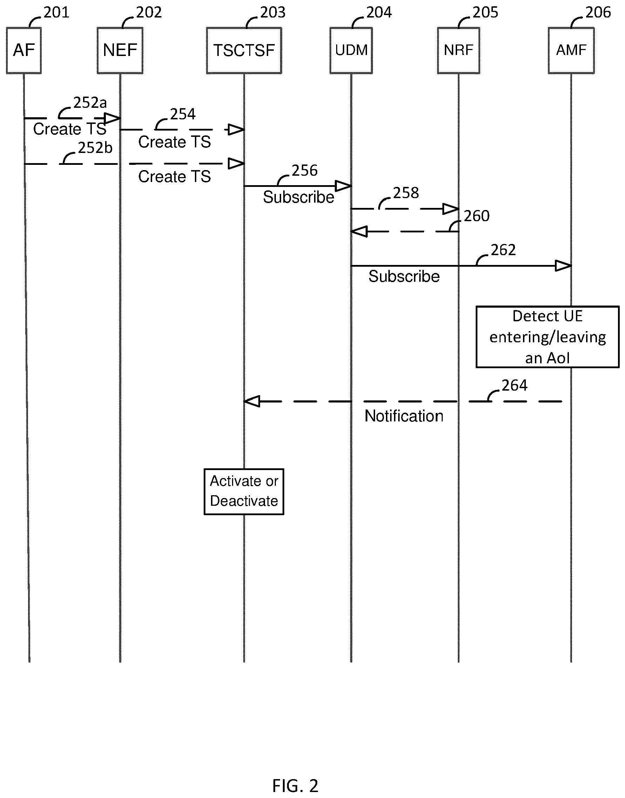

**FIG. 2** is a message flow diagram . As shown in FIG. 2, an AF 201 transmits a create TS configuration request 252a or 252b, which request comprises CA information specifying a CA and an ID, which in one embodiment is: i) a group ID (GID) associated with a group of UEs or indicates any UE or ii) a UE ID (UID) (e.g., GPSI, SUPI, etc.) associated with a single UE. In one embodiment, the CA information in request 252a contains geographical data (e.g. longitude/latitude) defining the CA. In one embodiment, the CA information in request 252b contains a list of TAls defining the CA. Either request 252a or 252b may further include the parameters listed in Table 1. Request 252b may be a Ntsctsf_TimeSynchronization_ConfigCreate request message or a Ntsctsf_ASTICreate request message).

In the scenario where AF 201 transmits request 252a, the request is received by NEF 202 (and request 252a may be a Nnef_TimeSynchronization_ConfigCreate request message or a Nnef_ASTICreate request message). In the case where request 252a contains geographical data specifying the CA, NEF 202 functions to translate the geographical data to a list of one or more TAls that specify the CA and then sends to TSCTSF 203 a create TS configuration request 254 that contains the new CA information (i.e., the list of TAls) and the ID (request 254 may also include the parameters listed in Table 1).

After receiving request 252b or 254, TSCTSF 203 sends to a UDM 204 a subscription request 256 comprising the ID and the CA information (list of TAls) (e.g., the TSCTSF uses the Nudm_EventExposure_Subscribe to subscribe to the report of UE presence in the CA event). For instance, in this embodiment, TSCTSF uses the "Internal Event Exposure Subscription/Unsubscription via UDM" to be notified about events (i.e., UE mobility event notification service from the AMF) that the UDM subscribes for. That is, the TSCTSF uses an indirect method of event exposure subscription in AMF via UDM for a UE or group of UEs in order to get notified about UE(s) presence in the CA.

After receiving subscription request 256, UDM 204 discovers one or more AMF(s) covering the CA (e.g., covering at least one TA included in the CA) by invoking Nnrf_NFDiscovery_Request service operation 258 to NRF 205 with the TAI list as an input. NRF 205 responds by providing to UDM 204 a list of AMFs that serve the CA (e.g., a TA indicated by the TAI list). For instance, if the TAI list contains TAI-1 and TAI-2 and AMF-1 serves the TA identified by TAI-1 and AMF-2 serves the TA identified by TAI-2, then NRF 205 responds to request 258 by transmitting a response 260 that contains a first AMF ID identifying AMF-1 and a second AMF ID identifying AMF-2.

For each identified AMF, UDM 204 sends to the AMF a subscription message (e.g., Namf_EventExposure_Subscribe message) using the provided CA information and the ID (e.g. UID or GID) as a Target of Event Reporting. The corresponding service operation is specified in clause 5.2.2.3.2 of TS 23.502. For example, as shown in FIG. 2, UDM 204 transmits to AMF 206 at least a first subscribe request 262 that contains the ID and Aol information that identifies an Aol. The Aol information comprises the CA information (e.g., TAI list) received from the TSCTSF or a subset of the CA information (e.g., subset of the TAI list). Thus, the Aol specified by the Aol information is at least a subset of the specified CA. In this scenario, the request 262 includes notification target information (e.g., Notification Target Address parameter) indicating that the target for the notification is the TSCTSF 203. That is, the UDM includes information in request 262 indicating that notifications need to be sent directly to TSCTSF 203.

As shown in FIG. 2, as a result of the subscribe request 262, AMF 206 will send a notification to TSCTSF 203 whenever a UE associated with the ID included in subscribe request 262 enters or leaves the Aol (e.g., where the Aol comprises a set of TAs, AMF 206 sends the notification when the UE moves into or moves out of one of the TAs). The notification includes a UID of the UE that entered/left the Aol (the notification 264 may also include an indication that the UE entered/left the Aol).

After receiving notification 264, TSCTSF 203 will determine whether the UE has entered or left the CA based on the notification from the AMF(s) and take either an activation or deactivation action based on the decision. That is, if the decision indicates that the UE moved into the AF specified CA, then TSCTSF 203 performs an activation procedure (see, e.g., steps 5-6, clause 4.15.9.3.2 of TS 23.502 and section K.2.2 of TS 23.501), and if the decision indicates that the UE departed the CA, then TSCTSF 203 performs a deactivation procedure (see e.g., step 5-6, clause 4.15.9.3.4 of TS 23.502 and section K.2.2 of TS 23.501).

For example, in one embodiment, in response to determining that the UE has entered the CA, TSCTSF 203 may configure and initialize a PTP instance in a Device-side Time-Sensitive Networking (TSN) Translator (DS-TT) associated with the UE and may construct a port management information (PMI) container (PMIC) containing PMI (a PMI example is shown in Table 5.28.3.1-1 of TS 23.501) to activate the time synchronization services in the DS-TT. This PMIC may be transferred transparently via 5GS from TSCTSF 203 to the UE associated with the DS-TT. Additionally, TSCTSF 203 may i) constructs PMIC(s) and user plane node management information (UMI) container (UMIC) containing UMI (a UMI example is shown in Table 5.28.3.1-2 of TS 23.501) to NW-TT to activate the time synchronization service in NW-TT in respect to the service parameters; ii) determine the state of the time synchronization configuration upon the receiving responses from the DS-TT and NW-TT; iii) construct a PMIC to each DS-TT/UE to subscribe for the port management information changes in the DS-TT (the TSCTSF constructs PMIC(s) and UMIC to NW-TT to subscribe for the port management and user-plane management information changes in NW-TT); and iv) uses the procedure in clause 4.15.9.4 of TS 23.502 to manage the 5G access stratum time distribution for the UEs that are part of the impacted PTP instance.

In one embodiment, in response to determining that the UE has departed the CA, TSCTSF 203 may disable the PTP instance in the DS-TT and delete the TS service configuration (e.g., PMIC) for the PTP instance. For example, in one embodiment, in response to notification 266 indicating that the UE has departed the CA, TSCTSF 203 may performs actions as it would in response to receiving a Ntsctsf_TimeSynchronization_ConfigDelete/Ntsctsf_ASTIDelete service operation respectively (see steps 5-6 in clause 4.15.9.3.4 of TS23.502). Specifically, the TSCTSF: i) uses the PTP instance reference to identify the time synchronization service configuration and the corresponding AF sessions; ii) uses the procedures described in clause K.2.2 of TS 23.501 to disable the corresponding PTP instance(s) in the DS-TT(s) and NW-TT; iii) deletes the time synchronization service configuration for the respective PTP instance; iv) uses the procedure in clause 4.15.9.4 to deactivate the 5G access stratum time distribution for the UEs that are part of the impacted PTP instance.

Accordingly, to summarize, in one embodiment:
TSCTSF 203 becomes a consumer of a UDM service and exploits the already defined "Internal Event Exposure Subscription/Unsubscription via UDM" as defined in clause 4.15.4.4 of TS 23.502; the involved service operations are Nudm_EventExposure_Subscribe/Unsubscribe;
UDM 204 Subscribes with the AMF(s) about the report of UE presence using the Namf_EventExposure_Subscribe service and provides to the AMF with the Notification Target Address of the TSCTSF; and
AMF 206 tracks the UE's location to determine the UE's presence in an Aol (which is at least a subset of the specified CA) and notifies the TSCTSF based on the Notification Target Address provided by the UDM about the change of UE's status (IN, OUT, or UNKNOWN) in the Aol using the Namf_EventExposure_Notify service operation about the Namf_EventExposure_Subscribe events met in the AMF.

### Alternative 2

### Figure 3

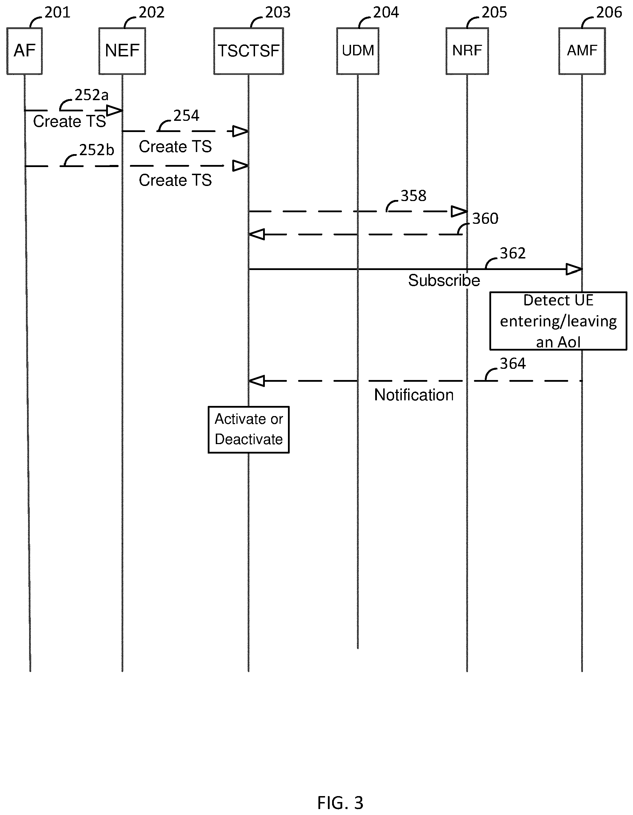

In this alternative, which is illustrated in **FIG. 3****,** TSCTSF 203 subscribes to the UE mobility event notification service directly from the AMF(s). More specifically, as in alternative 1, TSCTSF 203 receives either request 252b or 254, and, in response to request 252b/254, TSCTSF 203 discovers one or more AMF(s) by, for example, invoking Nnrf_NFDiscovery_Request service operation 358 to NRF 205 with the CA information (e.g., TAI list) included in message 252b/254 as an input. NRF 205 responds by providing to TSCTSF 203 the one or more AMFs that serve the CA specified by the CA information.

For each identified AMF, TSCTSF 203 invokes the Namf_EventExposure_Subscribe operation to the AMF using the provided CA information and ID (e.g., SUPI, Internal Group ID or indication that any UE is targeted) as a Target of Event Reporting. For example, as shown in FIG. 3, TSCTSF 203 transmits to AMF 206 at least a first subscribe request 362 that contains event target information that consists of or comprises the ID and Aol information specifying an Aol, where the Aol information comprises/consists of the CA information contained in message 252b/254 or comprises/consists of the CA information.

As shown in FIG. 3, as a result of the subscribe request 362, AMF 206 will send a notification to TSCTSF 203 whenever a UE associated with the ID included in subscribe request 362 enters or leaves the specified Aol. The notification includes a UID of the UE that entered/left the Aol (the notification 264 may also include an indication that the UE entered/left the Aol). After receiving the notification 364, TSCTSF 203 will determine whether the UE has entered/left the AF specified CA. If the TSCTSF 203 determines that the UE has entered the CA, then the TSCTSF 203 takes the activation action as described above in connection with alternative 1. Similarly, the TSCTSF 203 determines that the UE has left the CA, then the TSCTSF 203 takes the deactivation action as described above in connection with alternative 1.

Accordingly, to summarize, in one embodiment:
TSCTSF 203 discovers the related AMF(s) using the NRF's service operation Nnrf_NFDiscovery_Request; and, for each AMF, subscribes to the report of UE presence in a Aol that is at least a subset of the AF requested CA using the Namf_EventExposure_Subscribe service operation; and
AMF 206 tracks the UE's location to determine the UE's presence in an Aol and notifies the subscribed TSCTSF about the change of UE's status (IN, OUT, or UNKNOWN) in the Aol.

### Alternative 3

### Figure 4

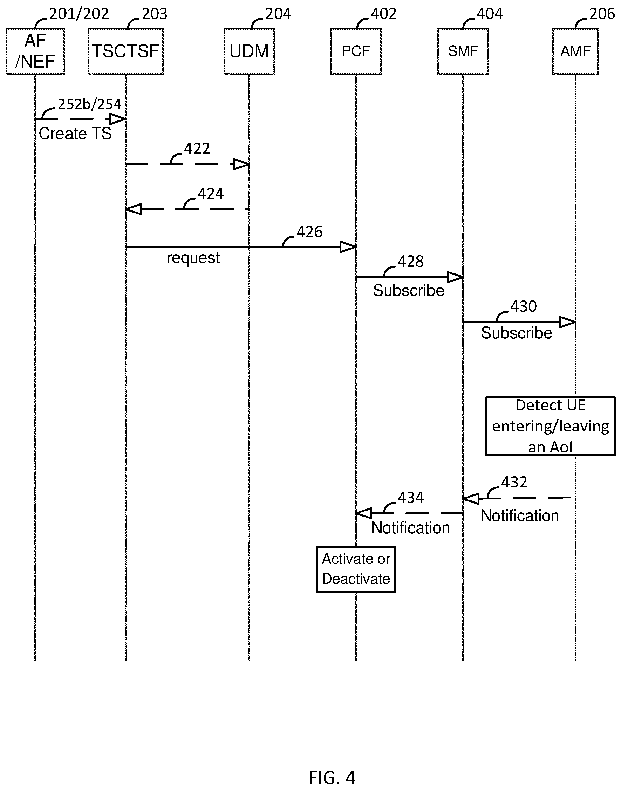

In this alternative, which is illustrated in the message flow diagram show in FIG. 4, PCF 402 subscribes to the UE mobility event notification service from a SMF 404 and SMF 404 subscribes to the UE mobility event notification service from the AMF. Based on the notifications, PCF 402 decides to activate/deactivate the TS accordingly.

The message flow begins with TSCTSF 203 receiving either request 252b or 254 (both of which contain CA information identifying a CA). In response to the request, if the specific coverage area applies to the 5G Access Stratum (AS) Time Distribution service or Time Synchronization service and the request targets a group of UEs, then TSCTSF 203 invokes the Nudm_SDM_Get service operation 422 to UDM 204 to map the group ID to a UID list (e.g., list of SUPIs) identifying UEs in that group. That is, in response to message 422, UDM transmits response message 424 that contains the UID list.

Next, for each identified UE, assuming the identified UE is connected and there is a PDU session for the UE and TSCTSF 203 has been previously notified about the PCF handling the PDU session, TSCTSF 203 sends to the PCF for the PDU session (with time synchronization information) a request 426 (e.g., the Npcf_PolicyAuthorization_Update request) that contains the CA information received from the AF or NEF. If, however, the UE is not connected (there is no PDU session for the UE), then TSCTSF 203 stores the received time synchronization information and the CA information to send them in a subsequent Npcf_PolicyAuthorization_Create request. The TSCTSF becomes aware of the PCF for the PDU Session after receiving the notification (Npcf_PolicyAuthorization_Notify service operation) from the PCF about the event of "5GS Bridge Information Notification" (clause 6.1.3.18 of TS 23.503). The event is triggered by the PDU Sessions Establishment and new 5GS Bridge Information detection.

Next, PCF 402 sends to SMF 404 a subscribe message 428 for the UE(s) entering and leaving a Presence Reporting Area (PRA) (which is the CA or is derived from the CA). For instance, a "UE-dedicated Presence Reporting Area" is (or is derived from) the CA (see clause 5.6.7 of TS 23.501) or by the TSCTSF to the PCF.

Next, SMF 404 subscribes to the "UE mobility event notification" service provided by AMF for reporting of UE presence in the PRA as described in clause 5.6.11 of TS 23.501. That is SMF 404 transmits to AMF a subscribe message 430 with information identifying the PRA.

Next, when AMF 206 detects that one of the UEs has entered/left the PRA subscribed by the SMF, the AMF notifies the SMF (see message 432).

Next, when the SMF detects that the UE(s) have entered/left the PRA subscribed by PCF 402, the SMF notifies the PCF (see message 434).

In response to receiving notification 434, PCF 402 will take either an activation or deactivation action based on whether the notification indicates the UE has entered or left the PRA.

For example, if notification 434 indicates that the UE has entered the PRA, then PCF 202 may deliver a PMIC to the UE to configure a PTP instance (identified by PTP Instance ID) in a DS-TT associated with the UE (e.g., a DS-TT connected to the UE or a DS-TT that is an component of the UE).

Similarly, if notification 434 indicates that the UE has departed from the PRA, then PCF 202 may delete the PTP instance in the DS-TT using PMIC and in NW-TT using UMIC as specified in TS 24.539. To remove a NW-TT port from a PTP instance in 5GS, the TSCTSF deletes the PTP instance in NW-TT using PMIC as specified in TS 24.539. If a PTP instance in 5GS is no more needed the TSCTSF may delete the PTP instance in NW-TT using UMIC as specified in TS 24.539.

Accordingly, to summarize, TSCTSF 203 may interact with UDM (Nudm_SDM_Get request service operation) to retrieve the list of SUPIs that belongs to an Internal Group ID; search for the PCF for a PDU Session (or the PCF for a UE, if the requested coverage area is being applied using the 5G Access Stratum Time Distribution method using the BSF service); and interact with the PCF for a PDU session by sending the Npcf_PolicyAuthorization_Create/Update (or with the PCF for a UE using the Npcf_AMPolicyAuthorization_Create/Update) request to indicate the AF-requested coverage area (List of TAls).

UDM 204 provides a response to the Nudm_SDM_Get request from the TSCTSF (if made) with the mapping between the Internal Group ID to a SUPI list.

PCF 402 subscribes with the SMF (or with the AMF) for the UE(s) in the PRA; and determines whether to activate/deactivate the requested service based on the UE's status in the PRA.

SMF 404 subscribes to the report of UE presence in a CA event with the AMF (Namf_EventExposure_Subscribe service operation); and notifies the subscribed PCF about the UE(s) presence in the PRA.

AMF 206 tracks the UE's location to determine the UE's presence in the PRA (mapped from the CA) and notifies the subscribed SMF/PCF about the change of UE's status.

### Alternative 4

### Figure 5

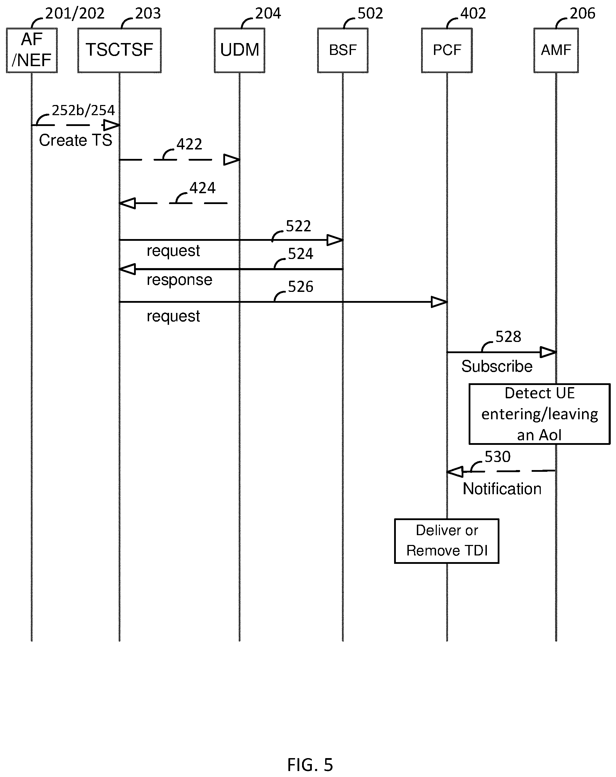

This alternative is used in the case of 5G Access Stratum time distribution. In this alternative, which is illustrated in the message flow diagram show in **FIG. 5****,** the TSCTSF needs to search for a PCF for a UE using a Binding Support Function (BSF) service and then contact the PCF which then directly subscribes for the event from the AMF. Thus, the AMF reports directly to the PCF. That is, in this scenario, PCF 402 subscribes to the UE mobility event notification service from the AMF. Based on the notifications, PCF 402 decides to activate/deactivate the TS accordingly.

The message flow begins with TSCTSF 203 receiving either request 252b or 254 (both of which contain CA information identifying a CA). In response to the request, if the specific coverage area (CA) targets a group of UEs, then TSCTSF 203 invokes the Nudm_SDM_Get service operation 422 to UDM 204 to map the group ID to a UID list (e.g., list of SUPIs) identifying UEs in that group. That is, in response to message 422, UDM transmits response message 424 that contains the UID list.

Next, for each identified UE, TSCTSF 203 sends to a BSF 502 a request 522 containing the UID for the UE, and BSF 502 responds by sending response 524. If the UE is registered, then response 524 will include a PCF ID identifying the PCF for the UE (if the UE is not registered, no PCF ID is included in response and this will trigger TSCTSF 203 to subscribe with the BSF for a UE registration events for the UE so that TSCTSF 203 can determine the PCF for the UE).

Assuming TSCTSF 203 has determined the PCF for the UE, TSCTSF 203 then sends to the PCF a request 526 (e.g., Npcf_AMPolicyAuthorization_Update request) containing the CA information included in message 252b/254 and a UID for the UE.

Next, the PCF send to the AMF a subscribe message 528 containing PRA information (which is the CA information or is derived from the CA information) identifying a PRA and UID. When the AMF detects the UE has entered/left the PRA, the AMF notifies the PCF by sending notification message 530.

In response to receiving notification 530, PCF 402 may deliver 5G AS Time Distribution information (TDI) or remove the 5G AS TDI based on whether the notification indicates the UE has entered or left the PRA (this is described in step 7 in clause 4.15.9.4 of TS 23.502). For example, as described in step 7 in clause 4.15.9.4 of TS 23.502 "PCF may initiate an AM Policy Association Modification procedure for the UE as described in clause 4.16.2.2 of TS 23.502 to provide AMF the 5G access stratum time distribution parameters. As part of this, the AMF shall, if supported, send the 5G access stratum time distribution indication (enable, disable) and the Uu time synchronization error budget, when they are available, to an NG-RAN node using NGAP procedures (e.g., UE Context Setup/Modification) specified in TS 38.413. The NG-RAN node shall, if supported, store the information in the UE Context. Based on this information, the NG-RAN node provides the 5GS access stratum time to the UE according to the Uu time synchronization error budget as provided by the TSCTSF (if supported by UE and NG-RAN)."

Accordingly, to summarize, TSCTSF 203 may interact with UDM (Nudm_SDM_Get request service operation) to retrieve the list of SUPIs that belongs to an Internal Group ID; search for the PCF using the BSF service; and interact with the PCF for a UE using the Npcf_AMPolicyAuthorization_Create/Update request to indicate the AF-requested CA.

UDM 204 provides a response to the Nudm_SDM_Get request from the TSCTSF (if made) with the mapping between the Internal Group ID to a SUPI list.

PCF 402 subscribes with the AMF for the UE(s) in the PRA; and determines whether to activate/deactivate the requested service based on the UE's status in the PRA.

AMF 206 tracks the UE's location to determine the UE's presence in the PRA (mapped from the CA) and notifies the subscribed PCF about the change of UE's status.

### Procedures

In one embodiment, the existing time synchronization exposure procedures (clause 4.15.9 of TS 23.502) are enhanced.

First, an AF requesting a TS service must specify a CA. In one embodiment, a TAI list is used to define the CA. This approach is defined in clause 5.3.4.4 of TS 23.501. An AF within the operator's domain will have TA(s) configured, and, therefore, the AF can provide the TAI list directly. However, an AF outside the operator's domain will use geographical data to specify the CA, and the NEF will then map the geographical data to a TAI list.

Next, the TSCTSF may need to invoke the Nudm_SDM_Get service operation (defined in clause 5.2.3.3.2 of

TS 23.502) to the UDM to map an Internal Group ID to a SUPI list if the AF request targets a group of UEs and the solution is based on PCF activation/deactivation of the requested service (Alt. 3 and 4).

After that, a time synchronization activation/modification/deactivation can proceed with the difference that the UDM (Alt. 1), TSCTSF (Alt. 2), or SMF/PCF (Alt. 3/4) subscribes to the UE mobility event notification service from the AMF to detect the UE(s) presence in the CA and TSCTSF controls the activation/deactivation of the requested service (Alt. 1 and 2) or the PCF controls it (Alt. 3 and 4). The subscription to reports of UE presence in the CA procedure is described in clause 5.3.4.4 of TS 23.501. The UE's status in the CA (IN, OUT, or UNKNOWN) will be used by the TSCTSF or PCF to activate/deactivate the AF-requested TS service.

When the UDM is an NF subscribing to the UE mobility event notification service from the AMF (see, e.g., Alt. 1), the embodiment will resemble the procedure described in clause 4.15.4.4. of TS 23.502, i.e., "Internal Event Exposure Subscription/Unsubscription via UDM" where the TSCTSF takes the role of a consumer invoking Nudm_EventExposure_Subscribe/Unsubscribe request to the UDM.

### Figure 8

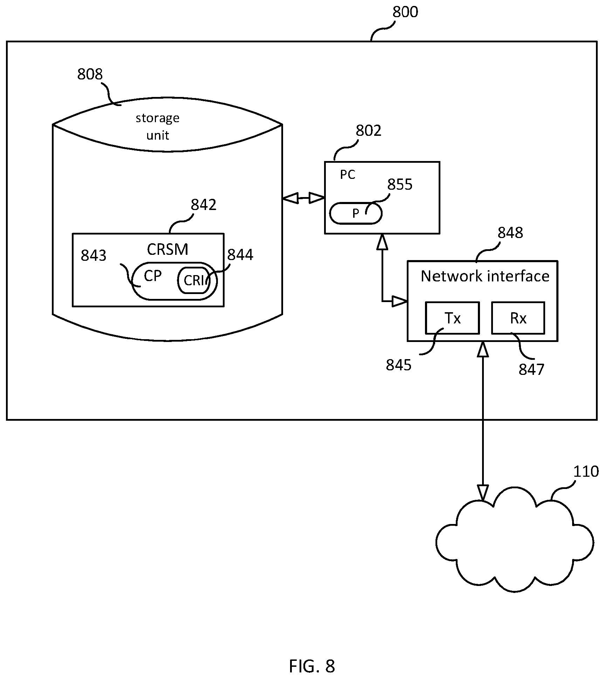

**FIG. 8** is a block diagram of network node 800, which can be used to implement any of the NFs disclosed herein (e.g., TSE, TSCTSF, UDM, PCF, etc.). For instance, in embodiments where an NF consists of software, network node 800 may run the NF (or execute a virtual machine that runs the NF). As shown in FIG. 8, network node 800 may comprise: processing circuitry (PC) 802, which may include one or more processors (P) 855 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., network node 800 may be a distributed computing apparatus); at least one network interface 848 (e.g., a physical interface or air interface) comprising a transmitter (Tx) 845 and a receiver (Rx) 847 for enabling network node 800 to transmit data to and receive data from other nodes connected to a network 110 (e.g., an Internet Protocol (IP) network) to which network interface 848 is connected (physically or wirelessly) (e.g., network interface 848 may be coupled to an antenna arrangement comprising one or more antennas for enabling network node 800 to wirelessly transmit/receive data); and a local storage unit (a.k.a., "data storage system") 808, which may include one or more non-volatile storage devices and/or one or more volatile storage devices. In embodiments where PC 802 includes a programmable processor, a computer readable storage medium (CRSM) 842 may be provided. CRSM 842 stores a computer program (CP) 843 comprising computer readable instructions (CRI) 844. CRSM 842 may be a non-transitory computer readable medium, such as, magnetic media (e.g., a hard disk), optical media, memory devices (e.g., random access memory, flash memory), and the like. In some embodiments, the CRI 844 of computer program 843 is configured such that when executed by PC 802, the CRI causes network node 800 to perform steps described herein (e.g., steps described herein with reference to the flow charts). In other embodiments, network node 800 may be configured to perform steps described herein without the need for code. That is, for example, PC 802 may consist merely of one or more ASICs. Hence, the features of the embodiments described herein may be implemented in hardware and/or software.

Fig. 6 describes a method performed by a time synchronization entity, TSE (203) (e.g., a TSCTSF), the method comprising:
receiving (s602) a first request (252b, 254) (e.g., Ntsctsf_TimeSynchronization_ConfigCreate Request) comprising i) an identifier, ID, associated with at least a first user equipment, UE (e.g., the ID is associated only with the first UE, the ID is associated with a group of UEs that includes the first UE, or the ID identifies any UE) and ii) coverage area, CA, information specifying a CA; and
in response to receiving the create service request,
   i) invoking (s604) a subscription service to receive a notification (e.g. directly from an AMF or from an AMF via another network node such as an UDM or an SMF) whenever the first UE moves into or moves out of an area of interest, Aol, or
   ii) sending (s606) to a policy control function, PCF (402), a second request (426, 526) comprising the CA information, wherein the second requests is configured to cause the PCF to invoke the subscription service to receive a notification whenever the first UE moves into or moves out of an Aol, wherein
      the Aol is identical to the CA or the Aol is a subset of the CA.

Optionally, the CA comprises a set of one or more tracking areas and/or a set of one or more geographical regions, optionally wherein
the CA comprises a set of one or more tracking areas, TAs, and
the CA information included in the first request comprises, for each TA included in the set of TAs, a TA identifier, TAI, identifying the TA.

Optionally:
the ID is associated with a group of UEs, and
the method further comprises:
   the TSE sending to a network entity a query comprising the ID; and
   the TSE receiving a response to the query, wherein the response comprises a set of one or more UE IDs, UIDs (e.g., SUPIs), wherein each UID included in the set of one more UIDs identifies a single subscriber.

**Optionally,**
the method comprises the TSE invoking the subscription service, and
invoking the subscription service comprises the TSE sending to a first network entity (e.g., UDM or AMF) a first subscription request (256, 362) comprising Aol information specifying the Aol.

Optionally,
invoking the subscription service comprises invoking a delegated subscription service, and
the first network entity is a Unified Data Management, UDM, instance.

Optionally, the first network entity is a first Access and Mobility Management, AMF, instance and, optionally, the method further comprises:
prior to sending to the first AMF instance the first subscription request, the TSE discovering the first AMF instance.

Furthermore, discovering the first AMF may comprise:
the TSE transmitting an AMF discovery request comprising the CA information; and
the TSE receiving an AMF discovery response responsive to the request, wherein the AFM discovery response comprises an AMF ID that identifies the first AFM instance.

In some embodiments,
the subscription request further comprises a first UE ID, UID, associated with the first UE, or
the subscription request further comprises the ID that was included in the create service request.

In all the embodiments of the invention,
the method comprises the TSE invoking the subscription service, and
the method further comprises:
   i) receiving a notification that the first UE has entered the Aol;
   ii) after receiving the notification, determining whether the first UE has entered the CA from an area not covered by the CA; and
   ii) in response to determining that the first UE has entered the CA from an area not covered by the CA, activating a time synchronization, TS, service for the UE.

Optionally, activating the TS service for the UE comprises:
initializing a Precision Time Protocol (PTP) instance in a Device-side Time-Sensitive Networking (TSN) Translator (DS-TT) associated with the first UE; and
constructing for the DS-TT a port management information, PMI, container, PMIC, containing PMI, and the method may further comprise providing the PMIC to the first UE

While various embodiments are described herein, it should be understood that they have been presented by way of example only, and not limitation. Thus, the scope of this disclosure should not be limited by any of the above-described exemplary embodiments, but is limited only by the appended claims.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (600) performed by a time synchronization entity, TSE (203) , e.g. a Time Sensitive Communication and Time Synchronization Function, TSCTSF, the method comprising:
receiving (s602) a first request (252b, 254) , e.g. Ntsctsf_TimeSynchronization_ConfigCreate Request, comprising i) an identifier, ID, associated with at least a first user equipment, UE **,** e.g.
the ID is associated only with the first UE, the ID is associated with a group of UEs that includes the first UE, or the ID identifies any UE, and ii) coverage area, CA, information specifying a CA; and
in response to receiving the create service request,
a) invoking (s604) a subscription service to receive a notification , e.g. directly from an AMF or from an AMF via another network node such as an UDM or an SMF, whenever the first UE moves into or moves out of an area of interest, Aol; where the method further comprises:
i) receiving a notification that the first UE has entered the Aol;
ii) after receiving the notification, determining whether the first UE has entered the CA from an area not covered by the CA; and
ii) in response to determining that the first UE has entered the CA from an area not covered by the CA, activating a time synchronization, TS, service for the UE, or
b) sending (s606) to a policy control function, PCF (402), a second request (426, 526) comprising the CA information, wherein the second requests is configured to cause the PCF to invoke the subscription service to receive a notification whenever the first UE moves into or moves out of an Aol, wherein
the Aol is identical to the CA or the Aol is a subset of the CA.

2. The method of claim 1, wherein the CA comprises a set of one or more tracking areas and/or a set of one or more geographical regions.

3. The method of claim 2, wherein
the CA comprises a set of one or more tracking areas, TAs, and
the CA information included in the first request comprises, for each TA included in the set of TAs, a TA identifier, TAI, identifying the TA.

4. The method of any one of claims 1-3, wherein
the ID is associated with a group of UEs, and
the method further comprises:
the TSE sending to a network entity a query comprising the ID; and
the TSE receiving a response to the query, wherein the response comprises a set of one or more UE IDs, UIDs **,** e.g. SUPIs, wherein each UID included in the set of one more UIDs identifies a single subscriber.

5. The method of any one of claims 1-4, wherein
the method comprises the TSE invoking the subscription service, and
invoking the subscription service comprises the TSE sending to a first network entity **,** e.g. UDM or AMF, a first subscription request (256, 362) comprising Aol information specifying the Aol.

6. The method of claim 5, wherein
invoking the subscription service comprises invoking a delegated subscription service, and
the first network entity is a Unified Data Management, UDM, instance.

7. The method of claim 5, wherein the first network entity is a first Access and Mobility Management, AMF, instance.

8. The method of claim 7, further comprising:
prior to sending to the first AMF instance the first subscription request, the TSE discovering the first AMF instance.

9. The method of claim 8, wherein discovering the first AMF comprises:
the TSE transmitting an AMF discovery request comprising the CA information; and
the TSE receiving an AMF discovery response responsive to the request, wherein the AFM discovery response comprises an AMF ID that identifies the first AFM instance.

10. The method of any one of claims 5-9, wherein
the subscription request further comprises a first UE ID, UID, associated with the first UE, or
the subscription request further comprises the ID that was included in the create service request.

11. The method of claim 1, wherein activating the TS service for the UE comprises:
initializing a Precision Time Protocol**,** PTP, instance in a Device-side Time-Sensitive Networking, TSN, Translator, DS-TT, associated with the first UE; and
constructing for the DS-TT a port management information, PMI, container, PMIC, containing PMI.

12. The method of claim 11, further comprising providing the PMIC to the first UE.

## Patentansprüche

1. Verfahren (600), das von einer Zeitsynchronisationseinheit, TSE (203), z. B. einer Time Sensitive Communication and Time Synchronization Function, TSCTSF, durchgeführt wird, wobei das Verfahren umfasst:
Empfangen (s602) einer ersten Anforderung (252b, 254), z. B. Ntsctsf_TimeSynchronization_ConfigCreate-Anforderung, die i) eine Kennung, ID, die mindestens einer ersten Benutzerausrüstung, UE, zugeordnet ist, z. B. die ID nur der ersten UE zugeordnet ist, die ID einer Gruppe von UEs zugeordnet ist, welche die erste UE beinhaltet, oder die ID eine beliebige UE identifiziert, und ii) Abdeckungsbereichs-, CA-, Informationen umfasst, die einen CA spezifizieren; und
als Reaktion auf das Empfangen der Diensterzeugungsanforderung,
a) Aufrufen (s604) eines Abonnementdienstes, um eine Benachrichtigung, z. B. direkt von einer AMF oder von einer AMF über einen anderen Netzwerkknoten, wie etwa eine UDM oder eine SMF, immer dann zu empfangen, wenn sich die erste UE in einen Bereich von Interesse, Aol, hinein oder aus diesem heraus bewegt; wobei das Verfahren weiter umfasst:
i) Empfangen einer Benachrichtigung, dass die erste UE in den Aol eingetreten ist;
ii) nach Empfangen der Benachrichtigung, Bestimmen, ob die erste UE in den CA aus einem Bereich heraus eingetreten ist, der nicht von dem CA abgedeckt ist; und
iii) als Reaktion auf das Bestimmen, dass die erste UE in den CA aus einem Bereich heraus eingetreten ist, der nicht von dem CA abgedeckt ist, Aktivieren eines Zeitsynchronisations-, TS-Dienstes für die UE, oder
b) Senden (s606) einer zweiten Anforderung (426, 526), welche die CA-Informationen umfasst, an eine Richtliniensteuerungsfunktion, PCF (402), wobei die zweite Anforderung konfiguriert ist, um die PCF zu veranlassen, den Abonnementdienst aufzurufen, um eine Benachrichtigung immer dann zu empfangen, wenn sich die erste UE in einen Aol hinein oder aus diesem heraus bewegt, wobei
der Aol mit dem CA identisch ist, oder der Aol eine Teilmenge des CA ist.

2. Verfahren nach Anspruch 1, wobei der CA ein Satz von einem oder mehreren Tracking-Bereichen und/oder ein Satz von einer oder mehreren geografischen Regionen umfasst.

3. Verfahren nach Anspruch 2, wobei
der CA einen Satz von einem oder mehreren Tracking-Bereichen, TAs, umfasst, und
die CA-Informationen, die in der ersten Anforderung beinhaltet sind, für jeden TA, der in dem Satz von TAs beinhaltet ist, eine TA-Kennung, TAI, umfassen, die den TA identifiziert.

4. Verfahren nach einem der Ansprüche 1-3, wobei
die ID einer Gruppe von UEs zugeordnet ist, und
das Verfahren weiter umfasst:
Senden einer Abfrage, welche die ID umfasst, durch die TSE an eine Netzwerkeinheit; und
Empfangen einer Antwort auf die Abfrage durch die TSE, wobei die Antwort einen Satz von einer oder mehreren UE-IDs, UIDs, z. B. SUPIs, umfasst, wobei jede UID, die in dem Satz von einer oder mehreren UIDs beinhaltet ist, einen einzelnen Abonnenten identifiziert.

5. Verfahren nach einem der Ansprüche 1-4, wobei
das Verfahren das Aufrufen des Abonnementdienstes durch die TSE umfasst, und
Aufrufen des Abonnementdienstes das Senden einer ersten Abonnementanforderung (256, 362), die Aoi-Informationen umfasst, die den Aol spezifizieren, durch die TSE an eine erste Netzwerkeinheit, z. B. UDM oder AMF, umfasst.

6. Verfahren nach Anspruch 5, wobei
Aufrufen des Abonnementdienstes Aufrufen eines delegierten Abonnementdienstes umfasst, und
die erste Netzwerkeinheit eine Unified Data Management-, UDM-, Instanz ist.

7. Verfahren nach Anspruch 5, wobei die erste Netzwerkeinheit eine erste Access and Mobility Management-, AMF-, Instanz ist.

8. Verfahren nach Anspruch 7, weiter umfassend:
vor dem Senden der ersten Abonnementanforderung an die erste AMF-Instanz, Entdecken der ersten AMF-Instanz durch die TSE.

9. Verfahren nach Anspruch 8, wobei das Entdecken der ersten AMF umfasst:
Übertragen einer AMF-Entdeckungsanforderung, welche die CA-Informationen umfasst, durch die TSE; und
Empfangen einer AMF-Entdeckungsantwort durch die TSE als Reaktion auf die Anforderung, wobei die AFM-Entdeckungsantwort eine AMF-ID umfasst, welche die erste AFM-Instanz identifiziert.

10. Verfahren nach einem der Ansprüche 5-9, wobei
die Abonnementanforderung weiter eine erste UE-ID, UID, umfasst, die der ersten UE zugeordnet ist, oder
die Abonnementanforderung weiter die ID umfasst, die in der Diensterzeugungsanforderung beinhaltet war.

11. Verfahren nach Anspruch 1, wobei Aktivieren des TS-Dienstes für die UE umfasst:
Initialisieren einer Precision Time Protocol-, PTP-, Instanz in einem Device-side Time-Sensitive Networking-, TSN-, Translator, DS-TT, welcher der ersten UE zugeordnet ist; und
Aufbauen für den DS-TT eines Port Management Information-, PMI-, Containers, PMIC, der PMI enthält.

12. Verfahren nach Anspruch 11, das weiter Bereitstellen des PMIC für die erste UE umfasst.

## Revendications

1. Procédé (600) exécuté par une entité de synchronisation temporelle, TSE (203), par exemple une fonction de communication sans délai et de synchronisation temporelle, TSCTSF, le procédé comprenant :
la réception (s602) d'une première requête (252b, 254), par exemple une requête Ntsctsf_TimeSynchronization_ConfigCreate, comprenant i) un identifiant, ID, associé à au moins un premier équipement d'utilisateur, UE, par exemple l'ID est associé uniquement au premier UE, l'ID est associé à un groupe d'UE qui inclut le premier UE, ou l'ID identifie n'importe quel UE, et ii) des informations de zone de couverture, CA, spécifiant une CA ; et
en réponse à la réception de la requête de création de service,
a) l'invocation (s604) d'un service d'abonnement pour recevoir une notification, par exemple directement d'une AMF ou d'une AMF via un autre nœud de réseau tel qu'une UDM ou une SMF, chaque fois que le premier UE entre ou sort d'une zone d'intérêt, Aol ; dans lequel le procédé comprend en outre :
i) la réception d'une notification indiquant que le premier UE est entré dans l'Aol ;
ii) après avoir reçu la notification, la détermination pour établir si le premier UE est entré dans la CA à partir d'une zone non couverte par la CA ; et
iii) en réponse à la détermination que le premier UE est entré dans la CA à partir d'une zone non couverte par la CA, l'activation d'un service de synchronisation temporelle, TS, pour l'UE, ou
b) l'envoi (s606) à une fonction de commande de politique, PCF (402), d'une seconde requête (426, 526) comprenant les informations CA, dans lequel la seconde requête est configurée pour amener la PCF à invoquer le service d'abonnement afin de recevoir une notification chaque fois que le premier UE entre ou sort d'une Aol, dans lequel
l'Aol est identique à la CA ou l'Aol est un sous-ensemble de la CA.

2. Procédé selon la revendication 1, dans lequel la CA comprend un ensemble d'une ou plusieurs zones de suivi et/ou un ensemble d'une ou plusieurs régions géographiques.

3. Procédé selon la revendication 2, dans lequel
la CA comprend un ensemble d'une ou plusieurs zones de suivi, TA, et
les informations CA incluses dans la première requête comprennent, pour chaque TA incluse dans l'ensemble de TA, un identifiant de TA, TAI, identifiant la TA.

4. Procédé selon l'une quelconque des revendications 1-3, dans lequel
l'ID est associé à un groupe d'UE, et
le procédé comprend en outre :
la TSE envoyant à une entité de réseau une interrogation comprenant l'ID ; et
la TSE recevant une réponse à l'interrogation, dans lequel la réponse comprend un ensemble d'un ou plusieurs ID d'UE, UID, par exemple des SUPI, dans lequel chaque UID inclus dans l'ensemble d'un ou plusieurs UID identifie un seul abonné.

5. Procédé selon l'une quelconque des revendications 1-4, dans lequel
le procédé comprend la TSE invoquant le service d'abonnement, et
l'invocation du service d'abonnement comprend la TSE envoyant à une première entité de réseau, par exemple UDM ou AMF, une première requête d'abonnement (256, 362) comprenant des informations d'Aol spécifiant l'Aol.

6. Procédé selon la revendication 5, dans lequel
l'invocation du service d'abonnement comprend l'invocation d'un service d'abonnement délégué, et
la première entité de réseau est une instance de gestion unifiée des données, UDM.

7. Procédé selon la revendication 5, dans lequel la première entité de réseau est une première instance de gestion d'accès et de mobilité, AMF.

8. Procédé selon la revendication 7, comprenant en outre :
avant d'envoyer à la première instance AMF la première requête d'abonnement, la TSE découvrant la première instance AMF.

9. Procédé selon la revendication 8, dans lequel la découverte de la première AMF comprend :
la TSE transmettant une requête de découverte d'AMF comprenant les informations CA ; et
la TSE recevant une réponse de découverte d'AMF en réponse à la requête, dans lequel la réponse de découverte d'AFM comprend un ID AMF qui identifie la première instance AFM.

10. Procédé selon l'une quelconque des revendications 5-9, dans lequel
la requête d'abonnement comprend en outre un premier ID d'UE, UID, associé au premier UE, ou
la requête d'abonnement comprend en outre l'ID qui a été inclus dans la requête de création de service.

11. Procédé selon la revendication 1, dans lequel l'activation du service TS pour l'UE comprend :
l'initialisation d'une instance de protocole de temps de précision, PTP, dans un traducteur de réseau sans délai, TSN, côté dispositif, DS-TT, associé au premier UE ; et
la construction, pour le DS-TT, d'un conteneur d'informations de gestion de port, PMI, PMIC, contenant des PMI.

12. Procédé selon la revendication 11, comprenant en outre la fourniture du PMIC au premier UE.
